# EUROPÄISCHE PATENTSCHRIFT

(11) **EP 2 627 899 B1**
(45) Veröffentlichungstag und Bekanntmachung des Hinweises auf die Patenterteilung: **17.08.2016**
(21) Anmeldenummer: 11769785.4
(22) Anmeldetag: 05.10.2011
(51) Int. Cl.: F03D 1/06, B21K 3/04, B29C 65/54, B29C 65/00, F16B 11/00, B29L 31/08

(54) **FERTIGUNG EINES ROTORBLATTES EINER WINDENERGIEANLAGE**
MANUFACTURE OF A ROTOR BLADE FOR A WIND TURBINE
FABRICATION D'UNE PALE DE ROTOR D'ÉOLIENNE

(30) Priorität: 12.10.2010 DE 102010042327
(43) Veröffentlichungstag der Anmeldung: 21.08.2013
(73) Patentinhaber: Senvion GmbH, 22297 Hamburg (DE)
(72) Erfinder: ZELLER, Lenz, Simon, 24242 Felde (DE); GÜNTHER, Maik, 06567 Bad Frankenhausen (DE)
(74) Vertreter: Seemann, Ralph
(86) Internationale Anmeldenummer: PCT/EP2011/004964
(87) Internationale Veröffentlichungsnummer: WO 2012/048813

(56) Entgegenhaltungen:
- WO-A1-2010/023140
- US-A1- 2008 075 603
- US-A1- 2010 132 884
- US-B2- 7 179 059

## Beschreibung

Die Erfindung betrifft ein Verfahren zum Fertigen eines Rotorblattes einer Windenergieanlage aus wenigstens einem ersten Rotorblattelement und einem zweiten Rotorblattelement. Die Erfindung betrifft ferner eine Fertigungseinrichtung zum Fügen eines ersten Rotorblattelementes und eines zweiten Rotorblattelementes bei der Fertigung eines Rotorblattes einer Windenergieanlage mit einer ersten Positionierungsvorrichtung für das erste Rotorblattelement und einer zweiten Positionierungsvorrichtung für das zweite Rotorblattelement. Die Erfindung betrifft außerdem ein Rotorblatt für eine Windenergieanlage aus wenigstens einem ersten Rotorblattelement und einem zweiten Rotorblattelement sowie eine Windenergieanlage.

Rotorblätter für große Windenergieanlagen werden aus mehreren Teilen gefertigt, die einzeln vorgefertigt und dann verklebt werden. Beispielsweise umfasst ein Rotorblatt zwei Rotorblattschalen, die Ober- und die Unterschale, die die äußere Form und somit die wesentlichen aerodynamischen Eigenschaften des Rotorblattes vorgeben. Zur Stabilisierung umfasst das Rotorblatt ferner üblicherweise zwei Stege, die sich im Inneren des Rotorblattes im Wesentlichen über die gesamte Länge erstrecken.

Zur Fertigung solch eines Rotorblattes werden zunächst die Rotorblattschalen sowie die Stege einzeln vorgefertigt, wobei jedes Bauteil wiederum aus einzelnen kleineren Segmenten bestehen kann. Die Stege werden sodann in eine der Rotorblattschalen, zumeist die Unterschale, eingeklebt. In einem weiteren Fertigungsschritt wird dann die zweite Rotorblattschale mit der ersten Rotorblattschale sowie den Stegen verklebt.

Zum Verkleben zweier Teile bzw. Fügepartner wird dabei zunächst Kleber auf einen der Fügepartner aufgebracht. Aufgrund der großflächigen Klebestellen ergibt sich eine entsprechend hohe Bearbeitungszeit, weshalb langsam aushärtende Kleber mit langer Topfzeit bzw. langer Verarbeitungszeit verwendet werden. Nach Auftragen des Klebers wird der zweite Fügepartner in den Kleber gedrückt. Dabei wird ein Teil des Klebstoffes verdrängt und quillt am Rand der Klebefläche zwischen den beiden Fügepartnern heraus. In dieser Position müssen die Fügepartner gehalten werden, bis die Klebeverbindung soweit ausgehärtet ist, dass sie den Belastungen durch Gewicht und Bewegung der Fügepartner standhält.

Üblicherweise erfolgt eine aufwändige Nachbearbeitung, die insbesondere ein Tempern des Rotorblattes zum Abbau von mechanischen Spannungen innerhalb der Klebeverbindung umfasst, die dadurch entstehen, dass die Klebeverbindung während des Aushärtens durch das Zusammenpressen der Fügepartner unter mechanischem Druck steht. Auch wird der aus der Klebefläche herausgedrückte, überschüssige Kleber, der nicht zur Festigkeit der Klebeverbindung beiträgt, entfernt und entsorgt.

US 2008/0075603 A1 offenbart ein Verfahren zum Bilden einer Verbindung zwischen einer ersten und einer zweiten Schale eines Blattes. Hierbei wird ein Hohlraum zwischen der ersten und der zweiten Blattschale gebildet und ein Klebstoff in diesen Hohlraum eingeführt, um eine Verbindungslinie zwischen der ersten und der zweiten Blattschale zu bilden.

US 2010/0132884 A1 offenbart ein Verfahren zum Zusammenfügen eines Rotorblattes einer Windenergieanlage, wobei verschiedene Blattsegmente miteinander verfügt werden.

US 7 179 059 B2 offenbart ein Verfahren zum Zusammenfügen von laminierten Profilen für ein Rotorblatt einer Windenergieanlage.

WO 2010/023140 A1 offenbart ein Rotorblatt einer Windenergieanlage, umfassend eine Anordnung, mittels der Klebstoff begrenzt wird.

Es ist Aufgabe der vorliegenden Erfindung, ein Verfahren und eine Vorrichtung zum Fertigen eines Rotorblattes anzugeben, mit denen ein Rotorblatt schnell und zuverlässig gefertigt werden kann.

Die Aufgabe wird gelöst durch ein Verfahren zum Fertigen eines Rotorblattes einer Windenergieanlage aus wenigstens einem ersten Rotorblattelement und einem zweiten Rotorblattelement, das dadurch weitergebildet ist, dass das erste Rotorblattelement und das zweite Rotorblattelement in der gewünschten relativen Anordnung zueinander positioniert werden, so dass ein Fügespalt zwischen dem ersten Rotorblattelement und dem zweiten Rotorblattelement verbleibt, wobei zum Fügen des ersten Rotorblattelementes und des zweiten Rotorblattelementes Klebstoff in den Fügespalt eingebracht wird, wobei mittels eines Sensors der Klebstofffüllgrad im Fügespalt erfasst wird.

Im Rahmen der Erfindung wird unter einem Rotorblattelement ein vorgefertigtes Bauteil für ein Rotorblatt einer Windenergieanlage verstanden, das bei der Rotorblattfertigung mit wenigstens einem weiteren Rotorblattelement bzw. vorgefertigten Bauteil gefügt bzw. verklebt wird. Beispielsweise kann dies eine Rotorblattschale oder ein Teil davon (Schalensegment), ein Steg bzw. Hauptsteg oder ein Teil davon (Stegelement), ein Holm bzw. Holmkasten oder ein Teil davon oder ein Gurt oder ein Teil davon sein, wobei die Bezeichnung Rotorblattelement nicht auf die genannten Beispiele begrenzt ist.

Des Weiteren wird im Rahmen der Erfindung unter einem Fügespalt ein Raum oder Bereich verstanden, der sich zwischen einer Außenoder Oberfläche eines ersten Rotorblattelementes, die einem zweiten Rotorblattelement zugewandt angeordnet ist, und einer Außenoder Oberfläche des zweiten Rotorblattelementes, die dem ersten Rotorblattelement zugewandt angeordnet ist, erstreckt. Von den anderen vier Seiten des Raums bzw. des Fügespaltes, die insbesondere paarweise parallel oder im Wesentlichen parallel angeordnet sind, werden die beiden relativ längeren Seiten als Längsseiten und die beiden relativ kürzeren Seiten als Stirnseiten bezeichnet. Ein Fügespalt ist somit insbesondere ein flacher, schmaler und langgestreckter Bereich, der sich zwischen der Oberseite eines ersten Rotorblattelementes und der Unterseite eines zweiten Rotorblattelementes von einer ersten Stirnseite bzw. vom einen Ende entlang einer Längsseite bzw. einer Längsausdehnung bis zu einer zweiten Stirnseite bzw. zum anderen Ende erstreckt.

Bei dem erfindungsgemäßen Verfahren wird der Klebstoff, der vorzugsweise hochviskos ist, direkt in den Fügespalt eingebracht und kann dort unmittelbar aushärten. Dadurch ist es ermöglicht, Klebstoffe mit einer sehr kurzen Topfzeit bzw. Verarbeitungszeit zu verwenden, die beispielsweise lediglich ungefähr 10 Minuten beträgt. Dadurch wird zum einen die Prozesszeit für das Verkleben zweier Rotorblattelemente drastisch verkürzt und zum anderen eine Vielzahl an Klebstoffen verwendbar, die bisher nicht eingesetzt werden konnten. Insbesondere können bei dem erfindungsgemäßen Verfahren ein- oder mehrkomponentige sowie heiß- oder kaltaushärtende Klebstoffe eingesetzt werden. Geeignete Klebstoffe werden beispielsweise von den Firmen ITW (Plexus-MMA), Hexion, Henkel oder Dow/uppc hergestellt bzw. angeboten und vertrieben.

Ferner erfolgt das Verkleben der beiden Rotorblattelemente ohne äußeren Druck. Dadurch treten in der ausgehärteten Klebeverbindung wesentlich geringere mechanische Spannungen auf. Dementsprechend kann auf das anschließende Tempern verzichtet bzw. die Dauer des Temperns wesentlich reduziert werden, was zu einer weiteren Reduzierung der gesamten Prozesszeit für das Fertigen eines Rotorblattes beiträgt.

Des Weiteren ist das Positionieren der Rotorblattelemente bei dem erfindungsgemäßen Verfahren erleichtert, da lediglich die Gewichtskraft der Rotorblattelemente kompensiert, aber keine Druck kraft aufgebracht werden muss.

Vorzugsweise wird der Klebstoff an einer ersten Längsseite des Fügespalts in den Fügespalt eingebracht. Auf diese Weise sind die Fließwege des Klebstoffs innerhalb des Fügespaltes kurz, was eine gleichmäßige und schnelle Verteilung des Klebstoffs ohne Lufteinschlüsse begünstigt.

Im Rahmen der Erfindung ist es besonders vorteilhaft, wenn der Fügespalt entlang einer zweiten Längsseite, die der ersten Längsseite gegenüber liegt, abgedichtet ist bzw. abgedichtet wird. Dadurch wird ein Herausquellen des Klebstoffes aus dem Fügespalt weitestgehend verhindert, so dass nur so viel Klebstoff verbraucht wird, wie zum Füllen des Fügespaltes notwendig ist.

Im Rahmen der Erfindung kann vorgesehen sein, dass bereits beim Fertigen eines Rotorblattelementes eine Dichtung in das Rotorblattelement integriert wird oder dass vor dem Positionieren des Rotorblattelementes eine Dichtung am Rotorblattelement befestigt wird. Auf diese Weise wird ermöglicht, den Fügespalt gleichzeitig bzw. in einem Schritt mit der Positionierung der Rotorblattelemente, insbesondere einseitig und entlang einer Längsseite, abzudichten. Vorzugsweise ist das Rotorblattelement, an dem eine Dichtung befestigt wird oder ist, ein Steg oder ein Stegelement.

Besonders vorteilhaft ist es, wenn der Klebstoff beginnend an einem Ende des Fügespalts entlang der Längsausdehnung des Fügespalts schrittweise oder kontinuierlich fortfahrend in den Fügespalt eingebracht wird. Hierdurch werden Lufteinschlüsse zwischen einzelnen in den Fügespalt eingebrachten Klebstoffportionen wirksam verhindert oder zumindest reduziert.

Weiterhin vorteilhaft ist es, wenn der Klebstoff mittels einer Klebstoffeinbringungseinrichtung in den Fügespalt eingebracht wird. Hierdurch ist ein besonders gleichmäßiges Einbringen des Klebstoffs in den Fügespalt ermöglicht, wobei außerdem eine Automatisierung des erfindungsgemäßen Verfahrens oder einzelner Abläufe im Rahmen des erfindungsgemäßen Verfahrens ermöglicht wird.

Insbesondere kann es vorgesehen sein, dass das Einbringen des Klebstoffs in den Fügespalt gesteuert und/oder geregelt wird, indem insbesondere ein Druck, unter dem der Klebstoff eingebracht wird, eine Klebstoffmenge pro Zeiteinheit, die eingebracht wird, und/oder eine Bewegung einer Klebstoffeinbringungseinrichtung entlang des Fügespalts gesteuert und/oder geregelt wird.

Ebenso kann im Rahmen des erfinderischen Verfahrens vorgesehen sein, dass das erste Rotorblattelement, das insbesondere eine Rotorblattschale oder ein Schalensegment sein kann, auf einer, insbesondere passgenauen, Ablagevorrichtung abgelegt und das zweite Rotorblattelement, das insbesondere ein Steg oder ein Stegelement sein kann, relativ zum ersten Rotorblattelement, insbesondere mittels einer Setzvorrichtung, positioniert bzw. gesetzt wird. Hierbei wird vorteilhafterweise erreicht, das lediglich eines der beiden Rotorblattelemente, das insbesondere das leichtere der beiden zu fügenden Rotorblattelemente ist, während des Fügens gegen seine eigene Gewichtskraft gehalten werden muss. Gegebenenfalls kann es dabei vorteilhaft sein, das andere Rotorblattelement auf der Ablagevorrichtung gegen Verrutschen zu sichern. Insgesamt wird hierdurch eine besonders einfache Konstruktion der beiden Positionierungsvorrichtungen ermöglicht.

Die Aufgabe wird ferner gelöst durch eine Fertigungseinrichtung zur Fügung eines ersten Rotorblattelementes und eines zweiten Rotorblattelementes bei der Fertigung eines Rotorblattes einer Windenergieanlage mit einer ersten Positionierungsvorrichtung für das erste Rotorblattelement und einer zweiten Positionierungsvorrichtung für das zweite Rotorblattelement, die dadurch weitergebildet ist, dass das erste Rotorblattelement und das zweite Rotorblattelement mittels der ersten Positionierungsvorrichtung und der zweiten Positionierungsvorrichtung in der gewünschten relativen Anordnung zueinander positionierbar sind, so dass ein Fügespalt zwischen dem ersten Rotorblattelement und dem zweiten Rotorblattelement verbleibt, wobei eine Klebstoffeinbringungseinrichtung zur Einbringung von Klebstoff in den Fügespalt vorgesehen ist, wobei ein Sensor vorgesehen ist, wobei mittels des Sensors der Klebstofffüllgrad im Fügespalt erfassbar ist bzw. erfasst wird.

Vorteilhafterweise umfasst die Klebstoffeinbringungseinrichtung eine Klebstoffdüse, wobei die Klebstoffeinbringungseinrichtung und/oder die Klebstoffdüse entlang einer Längsseite des Fügespaltes bewegbar ausgebildet sind.

Des Weiteren ist erfindungsgemäß ein Sensor vorgesehen, wobei mittels des Sensors der Klebstofffüllgrad im Fügespalt, insbesondere im Bereich einer Klebstoffdüse, erfassbar ist bzw. erfasst wird. Beispielsweise kann hierzu ein optischer Sensor eingesetzt werden, der insbesondere den Kontrast oder den Glanzgrad zwischen dem Klebstoff und den Rotorblattelementen erfasst. Gegebenenfalls kann es vorteilhaft sein, den Klebstoff einzufärben, um insbesondere Unterschiede im Kontrast und/oder im Glanzgrad im Vergleich zu den Rotorblattelementen zu erhöhen.

Bevorzugt ist es, wenn eine Steuer- oder Regelvorrichtung für die Klebstoffeinbringungseinrichtung vorgesehen ist. Insbesondere kann vorgesehen sein, dass mittels der Steuer- oder Regelvorrichtung eine Öffnungsweite bzw. eine Querschnittsfläche einer Austrittsöffnung einer Klebstoffdüse, ein Klebstoffdruck und/oder eine Bewegung einer Klebstoffdüse und/oder der Klebstoffeinbringungseinrichtung steuer- und/oder regelbar sind bzw. gesteuert oder geregelt werden. Insbesondere erfolgt die Bewegung der Klebstoffdüse und/oder der Klebstoffeinbringungseinrichtung entlang des Fügespaltes, wobei beispielsweise die Geschwindigkeit der Klebstoffdüse oder der Klebstoffeinbringungseinrichtung in der Bewegungsrichtung gesteuert oder geregelt wird. Ebenso kann beispielsweise, insbesondere während der Bewegung entlang des Fügespaltes, der Abstand der Klebstoffdüse bzw. der Klebstoffeinbringungseinrichtung zum Fügespalt bzw. das Einhalten eines, insbesondere vorgebbaren, Sollabstands gesteuert oder geregelt werden.

Es kann auch vorteilhaft sein, eine Klebstoffmischvorrichtung zum Mischen von Klebstoff aus wenigstens zwei Komponenten, insbesondere als Teil der Klebstoffeinbringungseinrichtung, vorzusehen. Dadurch wird ermöglicht, dass Klebstoff aus zwei oder mehr Komponenten unmittelbar vor dem Einbringen in den Fügespalt aus den einzelnen Komponenten, beispielsweise Harzen und Härtern, gemischt wird, wodurch insbesondere auch Klebstoffe mit extrem kurzen Topfzeiten im Bereich weniger Minuten eingesetzt werden können.

Besonders bevorzugt ist es, wenn die erste Positionierungsvorrichtung als Ablagevorrichtung, insbesondere für eine Rotorblattschale oder ein Schalensegment, und die zweite Positionierungsvorrichtung als Setzvorrichtung, insbesondere für einen Steg oder ein Stegelement, ausgebildet sind.

Die Aufgabe wird ferner gelöst durch ein Rotorblatt einer Windenergieanlage aus wenigstens einem ersten Rotorblattelement und einem zweiten Rotorblattelement, das mit einem erfindungsgemäßen Verfahren und/oder unter Verwendung einer erfindungsgemäßen Fertigungseinrichtung gefertigt wird bzw. gefertigt wurde.

Die Aufgabe wird auch gelöst durch eine Windenergieanlage mit einem erfindungsgemäßen Rotorblatt.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: schematisch eine Windenergieanlage,
- Fig. 2: schematisch ein beispielhaftes Rotorblatt einer Windenergieanlage,
- Fig. 3a: schematisch zwei Rotorblattelemente beim Fügen gemäß dem erfindungsgemäßen Verfahren vor dem Einbringen von Klebstoff in den Fügespalt,
- Fig. 3b: schematisch die Rotorblattelemente aus Fig. 3a während des Einbringens von Klebstoff in den Fügespalt,
- Fig. 4: schematisch ein Ausführungsbeispiel für die Abdichtung des Fügespaltes zwischen einem Hauptsteg und einer Unterschale mittels einer in den Stegfuß integrierten Dichtlippe,
- Fig. 5a: schematisch ein Ausführungsbeispiel für die Abdichtung des Fügespaltes zwischen einer Oberschale und einer Unterschale an der Blattvorderkante und
- Fig. 5b: schematisch ein Ausführungsbeispiel für die Abdichtung des Fügespaltes zwischen einer Oberschale und einer Unterschale an der Blatthinterkante.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

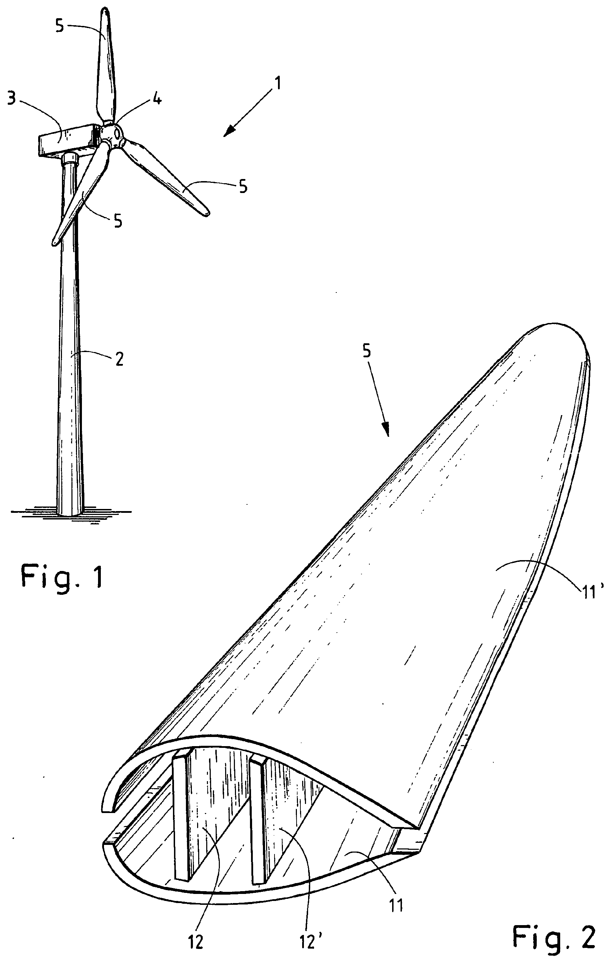

In Fig. 1 ist ein schematisches Beispiel für eine Windenergieanlage 1 gezeigt. Die Windenergieanlage 1 umfasst einen Turm 2, an dessen Spitze ein Maschinenhaus 3 angeordnet ist. Ein hauptsächlich im Maschinenhaus angeordneter und nicht gezeigter Triebstrang wird mittels eines Rotors 4 angetrieben, der insgesamt drei Rotorblätter 5 aufweist.

In Fig. 2 ist der Aufbau eines beispielhaften Rotorblattes 5 in einer schematischen dreidimensionalen Darstellung gezeigt. Das Rotorblatt 5 umfasst eine Unterschale 11, eine Oberschale 11' sowie zwei Hauptstege 12, 12'. Diese vier Rotorblattelemente werden einzeln, beispielsweise unter Verwendung von Faserverbundwerkstoffen, hergestellt und zur Fertigung des Rotorblattes miteinander gemäß einem erfindungsgemäßen Verfahren bzw. mittels einer erfindungsgemäßen Fertigungseinrichtung gefügt bzw. verklebt.

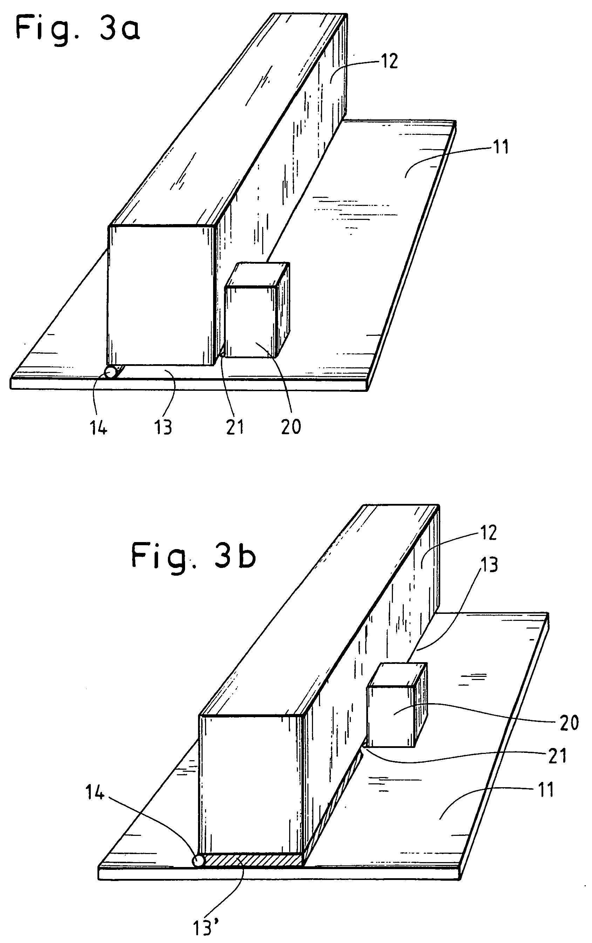

Ein erfindungsgemäßes Verfahren zum Fertigen eines Rotorblattes 5 aus mehreren Rotorblattelementen ist in den Fig. 3a und 3b beispielhaft anhand des Verklebens der Unterschale 11 mit einem Hauptsteg 12 des in Fig. 2 gezeigten Rotorblattes 5 schematisch dargestellt.

Die Unterschale 11 wird mit der Innenseite nach oben auf einer nicht gezeigten Ablagevorrichtung abgelegt und gegen Verrutschen gesichert. Sodann wird mittels einer ebenfalls nicht gezeigten Setzvorrichtung der Hauptsteg 12 in die gewünschte Endposition bzw. die gewünschte Anordnung relativ zur Unterschale 11 gebracht. An der der Unterschale zugewandten Seite des Hauptsteges ist eine Dichtung 14 befestigt, die nach Ausrichten bzw. Positionieren des Hauptsteges 12 den zwischen der Unterschale 11 und dem Hauptsteg 12 verbleibenden Fügespalt 13 zu einer Seite hin abdichtet. Somit wird der Hauptsteg 12 mittels der Setzvorrichtung knapp über der Unterschale 11 schwebend gehalten. Der so gebildete Fügespalt wird einseitig mittels einer Dichtung 14 abgedichtet, die beispielsweise flexibel oder federnd ausgebildet ist und sich dadurch der Oberfläche der Unterschale 11 anpasst. Im gezeigten Beispiel wird die Dichtung in den Rand des Fügespaltes eingebracht und dort befestigt bzw. fixiert.

Bei einem anderen Ausführungsbeispiel besteht die Dichtung 14 aus einer Gummilippe, die in die Unterseite des Hauptstegs 12 eingearbeitet ist oder dort befestigt wird. In diesem Fall entfällt der separate Arbeitsschritt für das Abdichten des Fügespaltes.

Da die Dichtung 14 selbst jedoch nicht zur Stabilität der endgültigen Klebeverbindung beiträgt, steht nur ein Teil der sowieso schon geringen Breite des Hauptsteges 12 für eine kraftschlüssige Verbindung bzw. Verklebung mit der Unterschale 11 zur Verfügung. Besonders vorteilhaft ist es daher, wenn die Dichtung 14 seitlich am Hauptsteg 12 angebracht bzw. eingearbeitet ist und die Unterkante des Hauptsteges 12 seitlich überragt.

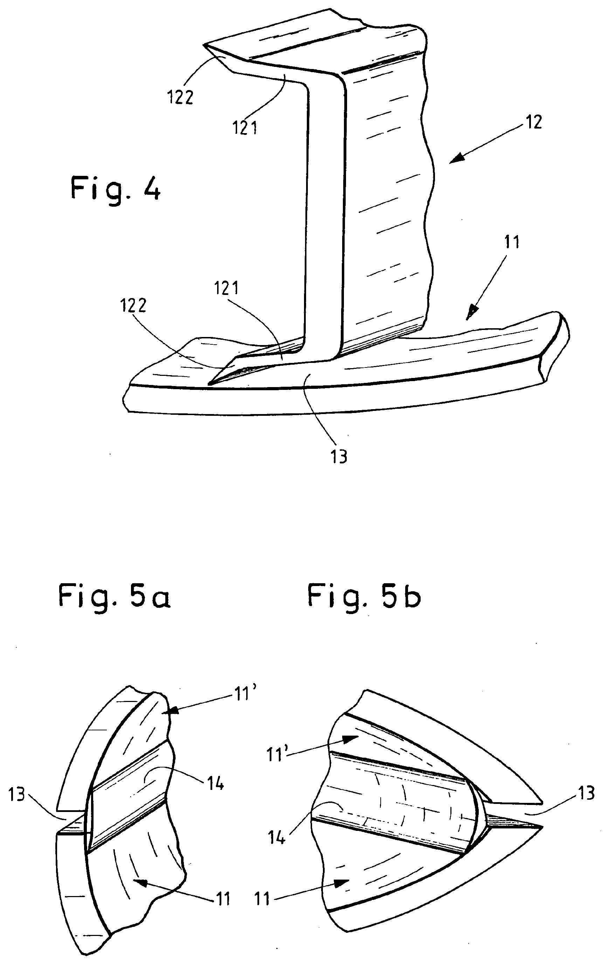

Eine besonders vorteilhafte Ausführung ist in Fig. 4 gezeigt. Dabei weist der Hauptsteg 12 Stegfüsse 121 auf, die eine großflächige Klebeverbindung mit der Ober- und der Unterschale ermöglichen. Die Stegfüsse laufen in dünnen, leicht abgewinkelten Dichtlippen 122 aus, die beim Setzen des Hauptsteges an der Innenfläche der Ober- bzw. der Unterschale anliegen. Die Dichtlippe 122 überragt die Unterkante des Stegfusses 121 weiter als die Höhe des endgültigen Fügespaltes 13 und wird daher beim Positionieren des Hauptsteges 12 unter Spannung gesetzt. Dadurch wird die an der Oberfläche der Unterschale 11 aufliegende flexible Dichtlippe 122 gegen die Unterschale 11 gedrückt, wodurch auch kleine Unebenheiten an der Oberfläche der Unterschale 11 abgedichtet werden.

Die beschriebene Ausgestaltung eines Stegfusses 121, der in einer dünnen, vorzugsweise sich verjüngenden, Dichtlippe 122 ausläuft, hat den weiteren Vorteil, dass die Abschlusskante des Stegfusses 121 bzw. der Dichtlippe 122 dünn und daher leicht zu bearbeiten ist. Eine Nachbehandlung dieser Kante, die insbesondere bei laminierten Stegen notwendig ist, ist dadurch wesentlich vereinfacht, weil die Dichtlippe entweder in einer einzigen oder zumindest in sehr wenigen Laminatlagen ausläuft und entsprechend einfacher geschnitten bzw. getrimmt werden kann.

In Fig. 3a ist die Situation nach Positionieren des Hauptsteges 12 gezeigt. Die Unterschale 11 und der Hauptsteg 12 sind in ihre endgültige Position gebracht und fixiert. Der Fügespalt 13 ist dadurch stabilisiert und außerdem mittels der Dichtung 14 an einer seiner Längsseiten abgedichtet. An der gegenüberliegenden Längsseite ist an einem Ende des Fügespaltes eine Injektionsvorrichtung 20 angeordnet, die eine Klebstoffdüse 21 zum Injizieren von Klebstoff in den Fügespalt 13 aufweist.

Beim Injizieren fließt der Klebstoff, insbesondere verursacht durch einen vorgebbaren Injektionsdruck, quer zur Längsausdehnung in den Fügespalt 13 bis zur gegenüberliegenden, abgedichteten Längsseite. Sobald ein Abschnitt 13' des Fügespaltes 13 mit Klebstoff verfüllt ist, wird die Injektionsvorrichtung 20 entlang der Längsseite des Fügespaltes 13 versetzt oder verfahren, wie beispielhaft in Fig. 3b anhand eines fortgeschrittenen Stadiums des Klebstoffinjizierens gezeigt wird. Somit wird eine gleichmäßige Verteilung des Klebstoffes im gesamten Fügespalt 13 sichergestellt.

Vorteilhafterweise ist die schematisch dargestellte Injektionsvorrichtung 20 automatisiert oder teilautomatisiert ausgebildet, indem insbesondere einzelne oder alle Abläufe im Zusammenhang mit dem Verfüllen des Fügespaltes mit Klebstoff bzw. mit dem Einbringen von Klebstoff in den Fügespalt automatisiert werden. Der Vorteil von automatisierten oder teilautomatisierten Abläufen besteht unter anderem darin, dass reproduzierbare und überprüfbare Produktionsbedingungen geschaffen werden und zusätzlich eine schnellere und qualitativ hochwertigere Fertigung von Rotorblättern ermöglicht ist.

Ein leicht zu automatisierender Ablauf besteht darin, pro Zeiteinheit eine vorgebbare oder einstellbare Menge an Klebstoff unter einem vorgebbaren und/oder einstellbaren Injektionsdruck bereitzustellen. Dazu kann beispielsweise eine, insbesondere elektrische, Klebstoffpumpe oder eine Klebstoffdüse 21 mit einer veränderbaren Öffnungsweite verwendet werden.

Auch kann ein maschinelles bzw. automatisches Versetzen bzw. Verfahren der Injektionsvorrichtung 20 vorteilhaft sein, wozu beispielsweise eine Kran-, Träger- und/oder Schienenvorrichtung für die Injektionsvorrichtung vorgesehen sein kann. Beispielsweise ist eine Halterung für die Injektionsvorrichtung vorgesehen, die vorteilhafterweise an einer der Positionierungsvorrichtungen, beispielsweise der beschriebenen Setzvorrichtung für den Hauptsteg, befestigt ist. Dabei können ferner Führungsschienen vorgesehen sein, um die Halterung entlang der Setzvorrichtung zu verfahren.

Alternativ kann die Injektionsvorrichtung 20 aber auch ein Fahrwerk umfassen, um beispielsweise auf der Oberseite der Unterschale verfahren zu werden. In diesem Fall ist es nicht nötig, aufwendige Träger- oder Schienenkonstruktionen für die Injektionsvorrichtung 20 bereitzustellen. Daher ist bei entsprechender Bauform der Injektionsvorrichtung, die vorzugsweise möglichst kompakt ausgebildet ist, die Anwendung des erfindungsgemäßen Fügeverfahrens auch ermöglicht, wenn die betreffende Klebestelle innerhalb des Rotorblattes liegt und von außen nicht zugänglich ist. Anknüpfend an das obige Beispiel wird beispielsweise die Oberschale 11' mit der Innenseite nach oben auf eine entsprechende Auflagevorrichtung gelegt und gegen Verrutschen gesichert. Danach wird die Baugruppe aus Unterschale 11 und den eingeklebten Hauptstegen 12, 12' gedreht und relativ zur Oberschale 12' positioniert. Nun werden mit einer entsprechend ausgebildeten Injektionsvorrichtung 20 die vier Fügespalte zwischen Oberschale 11' und Unterschale 11 sowie den beiden Hauptstegen 12, 12' in der beschriebenen Weise mit Klebstoff gefüllt, wobei die Injektionsvorrichtung 20 mittels ihres Fahrwerks auf der Innenseite der Oberschale 11' rollend bzw. fahrend bewegt wird.

Außerdem kann vorgesehen sein, dass die Komponenten eines mehrkomponentigen Klebstoffes automatisch bzw. maschinell gemischt werden. Hierzu kann die Injektionsvorrichtung 20 beispielsweise eine Mischvorrichtung umfassen.

Es ist vorteilhaft, zur Unterstützung einen oder mehrere Sensoren vorzusehen, mittels derer ein Istwert oder mehrere Istwerte erfasst oder ermittelt wird bzw. werden. Beispielsweise können dies sein: der Füllgrad von Klebstoff in einem Bereich des Fügespaltes, insbesondere im Bereich einer Klebstoffdüse, ein Injektionsdruck, eine pro Zeiteinheit injizierte Klebstoffmenge, eine Bewegung der Injektionsvorrichtung entlang des Fügespaltes und/oder wenigstens eine Eigenschaft des injizierten Klebstoffes, insbesondere ein Mischungsverhältnis einzelner Komponenten und/oder eine Viskosität. Die erfassten bzw. ermittelten Istwerte bzw. Parameter können dann der Bedienperson oder den Bedienpersonen zur Verfügung gestellt, beispielsweise angezeigt, werden.

Eine weitere Automatisierung des Verfahrens bzw. der Fertigungseinrichtung ist dadurch ermöglicht, dass eine Steuer- oder Regelvorrichtung vorgesehen ist, mittels der ein oder mehrere automatisierte Abläufe, insbesondere anhand wenigstens eines vorgebbaren Sollwertes und/oder anhand wenigstens eines mittels eines Sensors erfassten Istwertes, gesteuert oder geregelt wird.

Abhängig vom Grad der Automatisierung können mit dem erfindungsgemäßen Verfahren bzw. der erfindungsgemäßen Fertigungseinrichtung gegenüber einem herkömmlichen Verkleben eines Steges mit einer Rotorblattschale mindestens 50% der gesamten Prozesszeit, mindestens 50% des Klebers und 50% des Personals eingespart werden. Des Weiteren entfällt sämtlicher Restmüll, weil kein überflüssiger Kleber entsorgt wird. Außerdem kann unter Umständen in der Nachbearbeitung komplett auf das Tempern verzichtet werden.

Das erfindungsgemäße Verfahren ist auch anwendbar zum Fügen der Unterschale 11 und der Oberschale 11' an der Blattvorderkante bzw. der Blatthinterkante.

In Fig. 5a und Fig. 5b ist beispielhaft eine Abdichtung der Fügespalte 13 zwischen der Unter- und der Oberschale 11, 11' an der Blattvorder- bzw. Blatthinterkante gezeigt. Der Klebstoff wird von der Außenseite des Rotorblattes 5 in den Fügespalt 13 eingebracht. Eine dünne Dichtung 14, die beispielsweise aus glasfaserverstärktem Kunststoff (GFK) besteht, wird zuvor von der Innenseite vor den Fügespalt 13 geklebt und verhindert, dass überschüssiger Klebstoff in das Innere des Rotorblattes 5 läuft.

Dadurch wird verhindert, dass das Rotorblatt 5 unnötig schwer wird und sich beim exothermen Aushärten des Klebstoffes thermische Risse im überschüssigen Klebstoff im Innern des Rotorblattes 5 bilden, die sich im schlimmsten Fall bis in das Laminat der Unter- oder Oberschale fortsetzen.

Alle genannten Merkmale, auch die den Zeichnungen allein zu entnehmenden, werden allein und in Kombination als erfindungswesentlich angesehen.

### Bezugszeichenliste

- 1: Windenergieanlage
- 2: Turm
- 3: Maschinenhaus
- 4: Rotor
- 5: Rotorblatt
- 11: Unterschale
- 11': Oberschale
- 12, 12': Hauptsteg
- 121: Stegfuß
- 122: Dichtlippe
- 13: Fügespalt
- 13': Fügespalt mit Klebstoff
- 14: Dichtung
- 20: Injektionsvorrichtung
- 21: Klebstoffdüse

## Patentansprüche

1. Verfahren zum Fertigen eines Rotorblattes (5) einer Windenergieanlage (1) aus wenigstens einem ersten Rotorblattelement (11, 11', 12, 12') und einem zweiten Rotorblattelement (11, 11', 12, 12'), wobei das erste Rotorblattelement (11, 11', 12, 12') und das zweite Rotorblattelement (11, 11', 12, 12') in der gewünschten relativen Anordnung zueinander positioniert werden, so dass ein Fügespalt (13) zwischen dem ersten Rotorblattelement (11, 11', 12, 12') und dem zweiten Rotorblattelement (11, 11', 12, 12') verbleibt, wobei zum Fügen des ersten Rotorblattelementes (11, 11', 12, 12') und des zweiten Rotorblattelementes (11, 11', 12, 12') Klebstoff in den Fügespalt (13) eingebracht wird, **dadurch gekennzeichnet, dass** mittels eines Sensors der Klebstofffüllgrad im Fügespalt (13) erfasst wird und mittels des erfassten Klebstofffüllgrades der Klebstoff gesteuert oder geregelt in den Fügespalt (13) eingebracht wird.

2. Verfahren nach Anspruch 1, **dadurch gekennzeichnet, dass** der Klebstoff an einer ersten Längsseite des Fügespalts (13) in den Fügespalt (13) eingebracht wird.

3. Verfahren nach Anspruch 1 oder 2, **dadurch gekennzeichnet, dass** der Fügespalt (13) entlang einer zweiten Längsseite, die sich gegenüber der ersten Längsseite erstreckt, abgedichtet ist bzw. abgedichtet wird, wobei insbesondere beim Fertigen eines Rotorblattelementes (11, 11', 12, 12') eine Dichtung (14, 122) in das Rotorblattelement (11, 11', 12, 12') integriert wird oder vor dem Positionieren eines Rotorblattelementes (11, 11', 12, 12') eine Dichtung (14, 122) am Rotorblattelement (11, 11', 12, 12') befestigt wird.

4. Verfahren nach einem der Ansprüche 1 bis 3, **dadurch gekennzeichnet, dass** der Klebstoff beginnend an einem Ende des Fügespalts (13) entlang der Längsausdehnung des Fügespaltes (13) schrittweise oder kontinuierlich fortfahrend in den Fügespalt (13) eingebracht wird.

5. Verfahren nach einem der Ansprüche 1 bis 4, **dadurch gekennzeichnet, dass** der Klebstoff mittels einer Klebstoffeinbringungseinrichtung (20) in den Fügespalt (13) eingebracht wird.

6. Verfahren nach einem der Ansprüche 1 bis 5, **dadurch gekennzeichnet, dass** das Einbringen des Klebstoffs in den Fügespalt (13) gesteuert und/oder geregelt wird, indem insbesondere ein Druck, unter dem der Klebstoff eingebracht wird, eine Klebstoffmenge pro Zeiteinheit, die eingebracht wird, und/oder eine Bewegung der Klebstoffeinbringungseinrichtung (20) entlang des Fügespalts (13) gesteuert und/oder geregelt werden.

7. Verfahren nach einem der Ansprüche 1 bis 6, **dadurch gekennzeichnet, dass** das erste Rotorblattelement (11, 11'), insbesondere auf einer Ablagevorrichtung, abgelegt und das zweite Rotorblattelement (12, 12') relativ zum ersten Rotorblattelement (11, 11'), insbesondere mittels einer Setzvorrichtung, positioniert bzw. gesetzt wird.

8. Fertigungseinrichtung zur Fügung eines ersten Rotorblattelementes (11, 11', 12, 12') und eines zweiten Rotorblattelementes (11, 11', 12, 12') bei der Fertigung eines Rotorblattes (5) einer Windenergieanlage (1) mit einer ersten Positionierungsvorrichtung für das erste Rotorblattelement (11, 11', 12, 12') und einer zweiten Positionierungsvorrichtung für das zweite Rotorblattelement (11, 11', 12, 12'), wobei das erste Rotorblattelement (11, 11', 12, 12') und das zweite Rotorblattelement (11, 11', 12, 12') mittels der ersten Positionierungsvorrichtung und der zweiten Positionierungsvorrichtung in der gewünschten relativen Anordnung zueinander positionierbar sind, so dass ein Fügespalt (13) zwischen dem ersten Rotorblattelement (11, 11', 12, 12') und dem zweiten Rotorblattelement (11, 11', 12, 12') verbleibt, wobei eine Klebstoffeinbringungseinrichtung (20) zur Einbringung von Klebstoff in den Fügespalt (13) vorgesehen ist, **dadurch gekennzeichnet, dass** ein Sensor vorgesehen ist, wobei mittels des Sensors der Klebstofffüllgrad im Fügespalt (13) erfassbar ist bzw. erfasst wird und mittels des erfassten Klebstofffüllgrades der Klebstoff gesteuert oder geregelt in den Fügespalt (13) eingebracht wird.

9. Fertigungseinrichtung nach Anspruch 8, **dadurch gekennzeichnet, dass** die Klebstoffeinbringungseinrichtung (20) eine Klebstoffdüse (21) umfasst, wobei die Klebstoffeinbringungseinrichtung (20) und/oder die Klebstoffdüse (21) entlang einer Längsseite des Fügespalts (13) bewegbar ausgebildet sind.

10. Fertigungseinrichtung nach Anspruch 8 oder 9, **dadurch gekennzeichnet, dass** der Klebstofffüllgrad im Fügespalt (13) im Bereich einer Klebstoffdüse (21), erfassbar ist bzw. erfasst wird.

11. Fertigungseinrichtung nach einem der Ansprüche 8 bis 10, **dadurch gekennzeichnet, dass** eine Steuer- oder Regelvorrichtung für die Klebstoffeinbringungseinrichtung (20) vorgesehen ist, mittels derer insbesondere eine Querschnittsfläche einer Austrittsöffnung einer Klebstoffdüse (21), ein Klebstoffdruck und/oder eine Bewegung einer Klebstoffdüse (21) und/oder der Klebstoffeinbringungseinrichtung (20) entlang des Fügespalt (13) steuer- und/oder regelbar sind oder gesteuert und/oder geregelt werden.

12. Fertigungseinrichtung nach einem der Ansprüche 8 bis 11, **dadurch gekennzeichnet, dass** eine Klebstoffmischvorrichtung zum Mischen von Klebstoff aus wenigstens zwei Komponenten, insbesondere als Teil der Klebstoffeinbringungseinrichtung (20), vorgesehen ist.

13. Fertigungseinrichtung nach einem der Ansprüche 8 bis 12, **dadurch gekennzeichnet, dass** die erste Positionierungsvorrichtung als Ablagevorrichtung, insbesondere für eine Rotorblattschale oder ein Schalensegment (11, 11'), und die zweite Positionierungsvorrichtung als Setzvorrichtung, insbesondere für einen Steg oder ein Stegelement (12, 12'), ausgebildet sind.

14. Rotorblatt (5) einer Windenergieanlage (1) aus wenigstens einem ersten Rotorblattelement (11, 11', 12, 12') und einem zweiten Rotorblattelement (11, 11', 12, 12'), das mit einem Verfahren nach einem der Ansprüche 1 bis 8 und/oder unter Verwendung einer Fertigungseinrichtung nach einem der Ansprüche 9 bis 13 gefertigt wird bzw. gefertigt wurde.

15. Windenergieanlage (1) mit einem Rotorblatt (5) nach Anspruch 14.

## Claims

1. A method for manufacturing a rotor blade (5) of a wind turbine (1) made of at least a first rotor blade element (11, 11', 12, 12') and a second rotor blade element (11, 11', 12, 12'), wherein the first rotor blade element (11, 11', 12, 12') and the second rotor blade element (11, 11', 12, 12') are positioned in the desired relative arrangement with respect to each other, so that a joining gap (13) remains between the first rotor blade element (11, 11', 12, 12') and the second rotor blade element (11, 11', 12, 12'), wherein adhesive is introduced into the joining gap (13) to join the first rotor blade element (11, 11', 12, 12') and the second rotor blade element (11, 11', 12, 12'), **characterised in that** the adhesive filling level in the joining gap (13) is detected by means of a sensor and the adhesive is introduced into the joining gap (13) in a controlled and regulated manner by means of the detected adhesive filling level.

2. The method according to claim 1, **characterised in that** the adhesive is introduced into the joining gap (13) on a first longitudinal side of the joining gap (13).

3. The method according to claim 1 or 2, **characterised in that** the joining gap (13) is, or respectively becomes, sealed along a second longitudinal side which extends opposite the first longitudinal side, wherein, in particular when manufacturing a rotor blade element (11, 11', 12, 12'), a seal (14, 122) is integrated into the rotor blade element (11, 11', 12, 12') or, before the positioning of a rotor blade element (11, 11', 12, 12'), a seal (14, 122) is attached to the rotor blade element (11, 11', 12, 12').

4. The method according to one of claims 1 to 3, **characterised in that**, beginning at one end of the joining gap (13), the adhesive continues to be introduced into the joining gap (13) step by step or continuously along the longitudinal extension of the joining gap (13).

5. The method according to one of claims 1 to 4, **characterised in that** the adhesive is introduced into the joining gap (13) by means of an adhesive-introducing device (20).

6. The method according to one of claims 1 to 5, **characterised in that** the introduction of the adhesive into the joining gap (13) is controlled and/or regulated, by in particular a pressure, under which the adhesive is introduced, a quantity of adhesive per unit of time, which is introduced, and/or a movement of the adhesive-introducing device (20) along the joining gap (13) being controlled and/or regulated.

7. The method according to one of claims 1 to 6, **characterised in that** the first rotor blade element (11, 11') is in particular deposited on a depositing apparatus and the second rotor blade element (12, 12') is positioned, or respectively placed, relative to the first rotor blade element (11, 11'), in particular by means of a placing apparatus.

8. A manufacturing device for joining a first rotor blade element (11, 11', 12, 12') and a second rotor blade element (11, 11', 12, 12') during the manufacture of a rotor blade (5) of a wind turbine (1), with a first positioning apparatus for the first rotor blade element (11, 11', 12, 12') and a second positioning apparatus for the second rotor blade element (11, 11', 12, 12'), wherein the first rotor blade element (11, 11', 12, 12') and the second rotor blade element (11, 11', 12, 12') can be positioned in the desired relative arrangement with respect to each other by means of the first positioning apparatus and the second positioning apparatus, so that a joining gap (13) remains between the first rotor blade element (11, 11', 12, 12') and the second rotor blade element (11, 11', 12, 12'), wherein an adhesive-introducing device (20) is provided for introducing adhesive into the joining gap (13), **characterised in that** a sensor is provided, wherein the adhesive-filling level in the joining gap (13) can be detected, or respectively is detected, by means of the sensor and the adhesive is introduced into the joining gap (13) in a controlled or regulated manner by means of the detected adhesive filling level.

9. The manufacturing device according to claim 8, **characterised in that** the adhesiveintroducing device (20) comprises an adhesive nozzle (21), wherein the adhesiveintroducing device (20) and/or the adhesive nozzle (21) are formed movably along a longitudinal side of the joining gap (13).

10. The manufacturing device according to claim 8 or 9, **characterised in that** the adhesive-filling level in the joining gap (13) can be detected, or respectively is detected, in the area of an adhesive nozzle (21).

11. The manufacturing device according to one of claims 8 to 10, **characterised in that** a controlling or regulating apparatus for the adhesive-introducing device (20) is provided, by means of which in particular a cross-sectional surface of an outlet opening of an adhesive nozzle (21), a pressure of an adhesive and/or a movement of an adhesive nozzle (21) and/or of the adhesive-introducing device (20) along the joining gap (13) can be controlled and/or regulated or are controlled and/or regulated.

12. The manufacturing device according to one of claims 8 to 11, **characterised in that** an adhesive-mixing apparatus for mixing adhesive made of at least two components is provided in particular as part of the adhesive-introducing device (20).

13. The manufacturing device according to one of claims 8 to 12, **characterised in that** the first positioning apparatus is formed as a depositing apparatus, in particular for a rotor blade shell or a segment of a shell (11, 11'), and the second positioning apparatus as a placing apparatus, in particular for a web or a segment of a web (12, 12').

14. A rotor blade (5) of a wind turbine (1) made of at least a first rotor blade element (11, 11', 12, 12') and a second rotor blade element (11, 11', 12, 12'), which is manufactured, or respectively was manufactured, using a method according to one of claims 1 to 8 and/or by using a manufacturing device according to one of claims 9 to 13.

15. A wind turbine (1) with a rotor blade (5) according to claim 14.

## Revendications

1. Procédé de fabrication d'une pale de rotor (5) d'une éolienne (1) comprenant au moins un premier élément de pale de rotor (11, 11', 12, 12') et un deuxième élément de pale de rotor (11, 11', 12, 12'), ledit premier élément de pale de rotor (11, 11', 12, 12') et le deuxième élément de pale de rotor (11, 11', 12, 12') étant positionnés l'un par rapport à l'autre dans une disposition relative désirée de telle sorte qu'il existe un interstice d'assemblage (13) entre le premier élément de pale de rotor (11, 11', 12, 12') et le deuxième élément de pale de rotor (11, 11', 12, 12'), un adhésif étant introduit dans l'interstice d'assemblage (13) pour l'assemblage du premier élément de pale de rotor (11, 11', 12, 12') et du deuxième élément de pale de rotor (11, 11', 1 2, 1 2'), **caractérisé en ce qu'**un capteur du degré de remplissage de l'adhésif est introduit dans l'interstice d'assemblage (13), et **en ce que** le degré de remplissage de l'adhésif dans l'interstice d'assemblage (13) est commandé ou régulé au moyen de la détection faite par ce capteur.

2. Procédé selon la revendication 1, **caractérisé en ce que** l'adhésif est introduit dans l'interstice d'assemblage (13) au niveau d'un premier côté longitudinal de l'interstice d'assemblage (13).

3. Procédé selon la revendication 1 ou la revendication 2, **caractérisé en ce que** l'interstice d'assemblage (13) est scellé ou est le cas échéant apte à être scellé le long d'un deuxième côté longitudinal s'étendant à l'opposé du premier côté longitudinal, en particulier **en ce que**, lors de la fabrication d'un élément de pale de rotor (11, 11', 12, 12'), un joint (14, 122) est intégré dans l'élément de pale de rotor (11, 11', 12, 12'), ou **en ce qu'**avant la mise en place d'un élément de pale de rotor (11, 11', 12, 12'), un joint (14, 122) est fixé à l'élément de pale de rotor (11, 11', 12, 12').

4. Procédé selon l'une quelconque des revendications 1 à 3, **caractérisé en ce que** l'adhésif est introduit initialement à partir d'une extrémité de l'interstice d'assemblage (13) le long de la longueur d'extension de l'interstice d'assemblage (13), par paliers ou en procédant de façon continue dans l'interstice d'assemblage (13).

5. Procédé selon l'une quelconque des revendications 1 à 4, **caractérisé en ce que** l'adhésif est introduit dans l'interstice d'assemblage (13) au moyen d'un dispositif (20) de distribution d'adhésif.

6. Procédé selon l'une quelconque des revendications 1 à 5, **caractérisé en ce que** l'introduction de l'adhésif dans l'interstice d'assemblage (13) est commandé et / ou régulé, en particulier est commandé et / ou régulé selon une pression sous laquelle l'adhésif est introduit, une quantité d'adhésif qui est introduite par unité de temps, et / ou le déplacement du dispositif (20) de distribution d'adhésif le long de l'interstice d'assemblage (13).

7. Procédé selon l'une quelconque des revendications 1 à 6, **caractérisé en ce que** le premier élément de pale de rotor (11, 11') est déposé en particulier sur un dispositif support, et **en ce que** le deuxième élément de pale de rotor (12, 12') est positionné ou fixé par rapport au premier élément de pale de rotor (11, 11'), en particulier au moyen d'un dispositif de fixation.

8. Dispositif de fabrication pour assembler un premier élément de pale de rotor (11, 11', 12, 12') et un deuxième élément de pale de rotor (11, 11', 12, 12') pour la fabrication d'une pale de rotor (5) d'une éolienne (1), comprenant un premier dispositif de positionnement du premier élément de pale de rotor (11, 11', 12, 12') et un deuxième dispositif de positionnement du deuxième élément de pale de rotor (11, 11', 12, 12'), ledit premier élément de pale de rotor (11, 11', 12, 12') et le deuxième élément de pale de rotor (11, 11', 12, 12') étant mutuellement positionnés par le premier dispositif de positionnement et le deuxième dispositif de positionnement dans la disposition relative désirée, qui est telle qu'un interstice d'assemblage (13) subsiste entre le premier élément de pale de rotor (11, 11', 12, 12') et le deuxième élément de pale de rotor (11, 11', 12, 12'), un dispositif (20) de distribution d'adhésif étant prévu pour introduire de l'adhésif dans l'interstice d'assemblage (13), **caractérisé en ce qu'**il est prévu un capteur au moyen duquel le degré de remplissage de l'adhésif dans l'interstice d'assemblage (13) est détecté ou est apte à être détecté, et au moyen de la détection duquel est commandé ou régulé le degré de remplissage de l'adhésif qui est introduit dans l'interstice d'assemblage (13).

9. Dispositif de fabrication selon la revendication 8, **caractérisé en ce que** ledit dispositif (20) de distribution d'adhésif comprend une buse (21) de délivrance d'adhésif, ledit dispositif (20) de distribution d'adhésif et / ou la buse d'adhésif (21) étant conçus pour être mobiles le long d'un côté longitudinal de l'interstice d'assemblage (13).

10. Dispositif de fabrication selon la revendication 8 ou la revendication 9, **caractérisé en ce que** le degré de remplissage de l'adhésif est détecté ou apte à être détecté dans l'interstice d'assemblage (13) dans la zone dans laquelle se trouve une buse (21) de délivrance d'adhésif.

11. Dispositif de fabrication selon l'une des revendications 8 à 10, **caractérisé en ce qu'**il est prévu un dispositif de commande ou de régulation pour le dispositif (20) de distribution d'adhésif, au moyen duquel, en particulier, sont commandées et / ou régulées, ou aptes à être commandées et / ou régulées, une surface en coupe transversale d'une ouverture de sortie d'une buse (21) de délivrance d'adhésif, la pression de l'adhésif et / ou le mouvement d'une buse (21) de délivrance d'adhésif et / ou du dispositif (20) de distribution d'adhésif le long de l'interstice d'assemblage (13).

12. Dispositif de fabrication selon l'une des revendications 8 à 11, **caractérisé en ce qu'**il est prévu un dispositif de mélange d'adhésif pour le mélange de l'adhésif à partir d'au moins deux composants, en particulier comme partie du dispositif (20) de distribution d'adhésif.

13. Dispositif de fabrication selon l'une des revendications 8 à 12, **caractérisé en ce que** le premier dispositif de positionnement est formé en tant que dispositif de stockage, en particulier pour une coque de pale de rotor ou un segment de coque (11, 11'), et **en ce que** le deuxième dispositif de positionnement est formé en tant que dispositif de fixation, en particulier pour une cloison ou un élément formant cloison (12, 12').

14. Pale de rotor (5) d'une éolienne (1) comprenant au moins un premier élément de pale de rotor (11, 11', 12, 12') et un deuxième élément de pale de rotor (11, 11', 12, 12'), fabriquée ou apte à être fabriquée au moyen du procédé selon l'une des revendications 1 à 8 et / ou en utilisant un dispositif de fabrication selon l'une des revendications 9 à 13.

15. Éolienne (1) incluant une pale de rotor (5) selon la revendication 14.
